# EUROPEAN PATENT SPECIFICATION

(11) **EP 0 672 551 B1**
(45) Date of publication and mention of the grant of the patent: **23.06.1999**
(21) Application number: 95103322.4
(22) Date of filing: 08.03.1995
(51) Int. Cl.: B60H 1/34

(54) **Vent for the climate-control air of motor vehicles with selectable and individually adjustable diffuser and flow concentrator**
Entlüfter für Klimaregelung in Kraftfahrzeugen mit individuellem auswählbarem Verteiler und Strömungskonzentriervorrichtung
Event d'aération pour contrôle de climatisation dans véhicules automobiles avec diffuseur sélectionnable individuellement et concentrateur de débit

(30) Priority: 15.03.1994 IT TO940049 U
(43) Date of publication of application: 20.09.1995
(73) Proprietor: FOGGINI PROGETTI S.r.l., I-10092 Beinasco Torino (IT)
(72) Inventor: Roberto, Gianmario, I-10093 Collegno (IT); Davico, Claudio, I-10094 Giaveno (IT)
(74) Representative: Modiano, Guido, Dr.-Ing.

(56) References cited:
- EP-A- 0 368 017
- DE-C- 3 541 284
- FR-A- 1 503 575
- FR-A- 2 440 293
- FR-A- 2 585 636
- GB-A- 2 132 336
- PATENT ABSTRACTS OF JAPAN vol. 7 no. 165 (M-230) [1310] ,20 July 1983 & JP-A-58 071211 (NISSAN JIDOSHA) 27 April 1983,

## Description

The present invention relates to a vent for the climate-control air of motor vehicles, and more precisely to an air vent.

From FR-A-2 585 636 it is known an air vent for the climate control of motor vehicles as defined in the preamble of claim 1. The object of the invention is to improve the outflow from the air vent. This object is solved by the characterizing part of claim 1. The air vent according to the invention can be installed in any place of the dashboard or console of a motor vehicle and is also suitable for lateral installations, i.e. at the two ends of said dashboard.

The air vent comprises a diffuser body that contains a flow concentration duct having decreasing cross-sections. Both said diffuser and said concentrator, which can have any kind of cross-section, end at a grille the thickness whereof is approximately 5-30% of the shorter side of the outlet section of the concentrator. The grille has air passage channels that preferably have a conical axial shape; with respect to the direction of the air stream, said channels diverge in the diffusion portion of the grille that closes the outlet section of the diffuser and converge in the concentration portion of the grille that closes the outlet section of the concentrator.

A valve unit, with a pair of valve elements, is provided so as to separately close or reduce the inlet sections of the diffuser and respectively of the concentrator, and an actuation means, equipped with a pair of cams that cooperate with respective pins for moving the elements of the valve unit, is provided in order to independently move said elements by means of a single knob that protrudes from a base arranged to the side of the grille.

Further purposes and advantages of the air vent according to the present invention will become apparent from the following detailed description and with reference to the accompanying exemplifying drawings, wherein:
figure 1 is a schematic longitudinal sectional view of the air vent according to the invention, with the valve elements in the position for fully closing both the diffuser and the concentrator;
figure 2 is a sectional view, similar to figure 1, of the valve elements of the air vent in the configuration in which the concentrator is open and the diffuser is closed;
figure 3 is a sectional view, similar to figure 1, of the valve elements of the air vent in the configuration in which the diffuser is open and the concentrator is closed;
figures 4a and 4b are enlarged-scale views of details of figure 1;
figure 5 is a detail plan view of the valve unit;
figures 5a and 5b are a normal view and a sectional view, taken respectively along the arrows Va-Va and along the line Vb-Vb of figure 5;
figure 6 is an exploded perspective view of the air vent of figure 1.

In the drawings, the reference numeral 10 designates a hollow diffuser body that extends and flares out from a manifold 11 meant to receive the feed duct (not shown) of the climate-control air.

The diffuser body 10, which delimits a diffusion chamber 10c that has any kind of cross-section, or a quadrangular or a circular one, is internally provided with a flow concentration duct 12 the cross-sections of which decrease along the flow direction; said cross-sections also have a generic profile, or a quadrangular or a circular one, and therefore the duct 12 is substantially frustum- or pyramid-shaped.

The diffuser body 10 and the concentration duct 12 are preferably formed separately, advantageously using thermoplastic material, and are rigidly coupled to each other with conventional connection means, advantageously by welding or, alternatively, by means of an adhesive and/or by virtue of snap-together elements (not shown).

Both-said diffuser body 10 and said concentration duct 12 have respective outlet sections 10a,12a at which there is a grille 13 the thickness whereof is approximately 5-30% of the shorter side of the outlet section 12a of the concentrator 12. The grille 13 is divided into two portions 13a,13b respectively for diffusion and concentration; the first one faces the outlet section 10a of the diffuser 10 and the second one faces the outlet section 12a of the concentrator 12. Said grille portions have respective series of air passage channels 14,15 that preferably have a conical axial shape but have different orientations with respect to the direction of the flow.

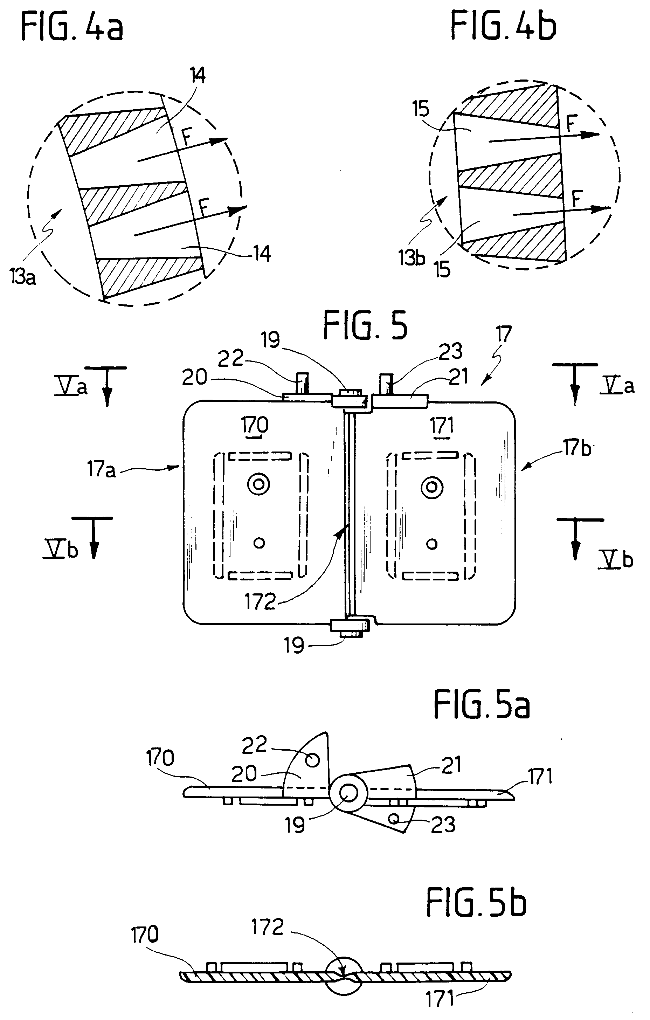

More precisely, and as clearly shown in the detail view of figures 4a,4b, the channels 14 of the diffusion portion 13a of the grille advantageously diverge with respect to the direction of the flow F, whereas the channels 15 of the concentration portion 13b of the grille advantageously converge. The cross-section profile of the channels 14,15 can be entirely generic; it is preferably circular. It is also possible to form the channels 14,15 with a cylindrical axial profile and to orientate the axis of said channels, whether conical or cylindrical, at generic angles with respect to the normal to the plane of tangency of the grille in the point being considered.

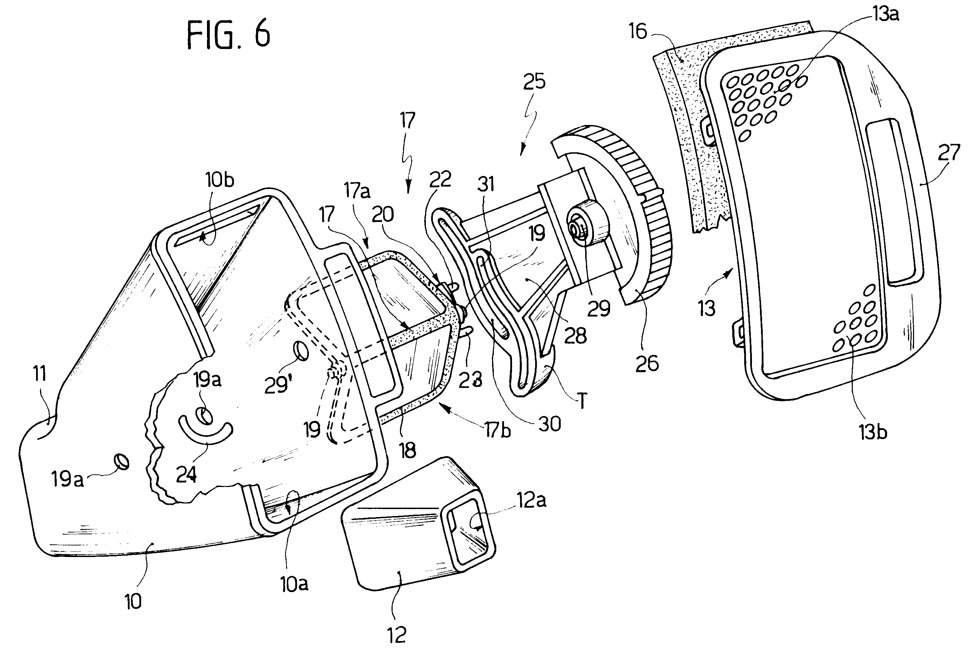

A pollen filter 16 is advantageously arranged between the grille 13 and the outlet sections 10a and 12a of the diffuser and respectively of the concentrator and can be removed for replacement; in particular, said filter can be inserted and extracted through a slot 10b provided on the body 10 at the respective outlet section 10a (figure 6).

As clearly shown in the figures, a valve unit, generally designated by the reference numeral 17, is provided in order to separately close or reduce the inlet sections of the diffuser 10 and respectively of the concentrator 12. Figures 5, 5a and 5b show that the valve unit 17 is formed by two valve elements 17a,17b including respective panels 170,171 that are mutually connected, so that they can perform a relative angular movement, by a film hinge 172 (figure 5b); the valve unit 17 is also made of thermoplastic material.

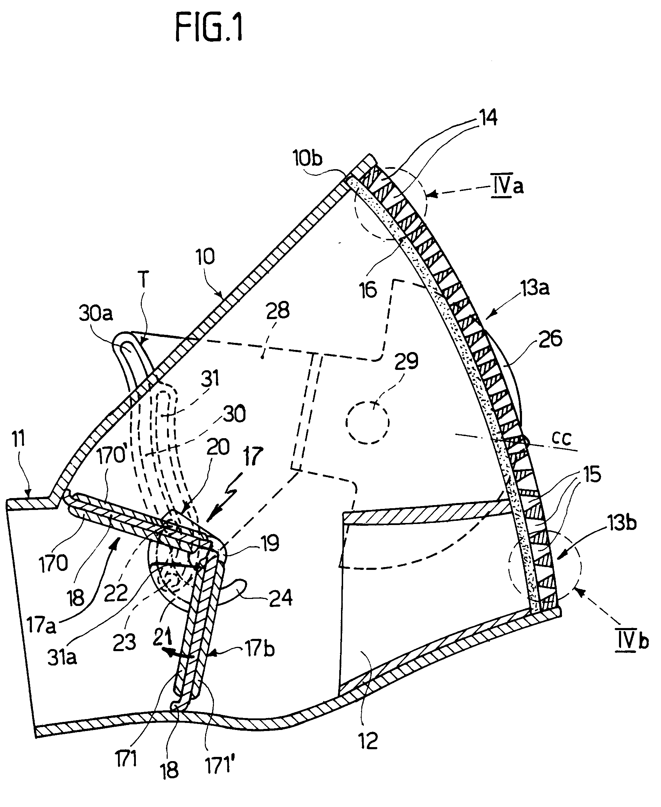

Respective riveted counterpanels 170',171' (figure 1) cooperate with the panels 170,171; the panels and the counterpanels are suitable to clamp in a sandwich-like manner a flexible gasket 18 that runs along the perimeter of the valve elements 17a,17b.

The panel 170 also has two pivots 19 suitable to cooperate with respective holes 19a provided in the diffuser body 10 (figure 4) to hinge the entire valve unit 17 to said body.

Both panels 170,171 furthermore have rigid sectors 20, 21 (figure 5) for supporting corresponding actuation pins 22 and 23 respectively, which protrude outside the body 10 by passing in a circular slot 24 provided on a side wall of said body and arranged concentrically with respect to the corresponding hole 19a.

An actuation means, generally designated by the reference numeral 25, that cooperates with the actuation pins 22,23, is provided in order to independently move the valve elements 17a,17b by means of a single knob 26 that protrudes from a base 27 located to the side of the grille 13. The actuation means 25 comprises an oscillating plate 28 that has a pivot 29 rotatably accommodated in a corresponding hole 29' of the diffuser body 10; the knob 26 is rigidly coupled to one end of said plate and a transmission head T is rigidly coupled to the other end of said plate. Cam-shaped slots 30,31 are formed in the head T and cooperate with the actuation pins 22,23 respectively. The slots 30,31 have respective central parallel portions that are shaped like a circular arc the center of curvature whereof is located on the axis of the pivot 29 and are accordingly ineffective in terms of the angular movement of the respective valve elements 17a,17b; said slots furthermore have profiled opposite end portions 30a,31a so as to produce, by engagement with the respective pins 22, 23, the oscillation of the valve elements 17a and 17b respectively.

In the configuration shown in figure 1, by virtue of the engagement of the pin 23 with the end portion 31a of the slot 31, which occurs by rotating the knob 26 into the angular position CC (closure), the valve element 17b is rotated in the clockwise direction shown by the arrow so that, as clearly shown, the two valve elements fully close both inlet sections of the diffuser 10 and of the concentrator 12.

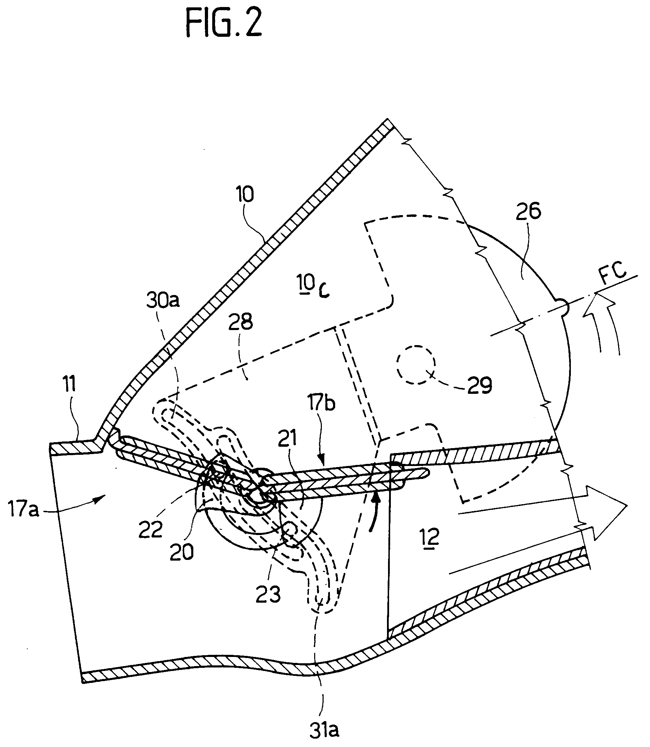

In the configuration shown in figure 2, which is obtained by moving the knob 26 into the angular position FC (concentrated flow), the valve element 17b, again by virtue of the engagement of the pin 23 with the end portion 31a of the slot 31, is rotated clockwise as indicated by the arrow and frees the inlet section of the concentration duct 12.

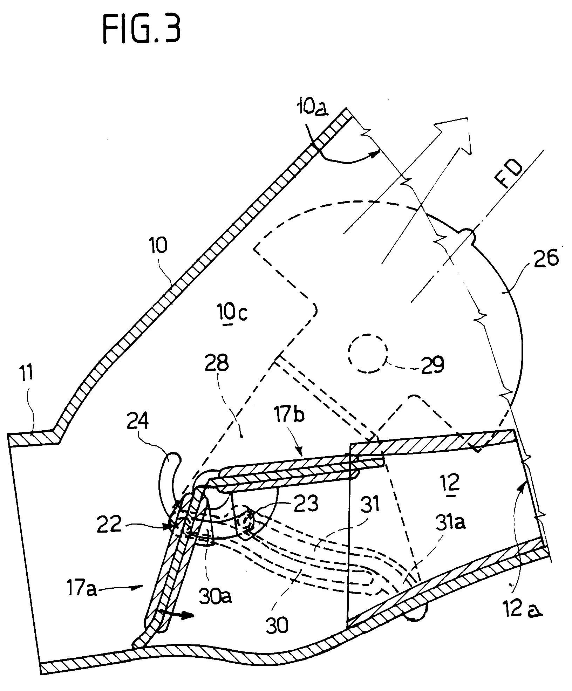

In the configuration shown in figure 3, by virtue of the engagement of the pin 22 with the end portion 30a of the slot 30, which occurs when the knob 26 is rotated into the position FD (diffuse flow), the valve element 17a is rotated counterclockwise, as indicated by the arrow, and arranged so as to free the inlet section of the diffuser 10 and close the inlet section of the concentrator 12. The positions CC, FC and FD of the knob 26 are advantageously made stable by a per se known position-setting element which is not illustrated.

Naturally, the angular positions of the knob 26, that are intermediate with respect to those described above, are matched by respective partial closures of the concentration duct 12 and/or of the diffuser 10.

It should be noted that in the chamber 10a of the diffuser 10, downstream of the valve element 17a, the air flow slows down and consequently increases in pressure, thus facilitating the uniform distribution of the flow from the channels 14 of the grille 13.

The effects of the present invention naturally extend to models that achieve an equal utility by using the same innovative concept defined by the claims that follow.

## Claims

1. An air vent for the climate-control air of motor vehicles, comprising a diffuser body (10) that delimits a diffusion chamber (10c) containing a flow concentration duct (12), which both end at a grille that is divided in two portions (13a,13b) for diffusion and concentration respectively, the inlet sections of the diffusion chamber (10c) and of the concentration duct (12) being closed and/or restricted separately by the respective valve elements (17a,17b) of a valve unit (17) actuated by an actuation means (25) that includes a single knob (26) which protrudes from a base (27) of the grille (13), characterized in that said diffusion chamber (10c) and said concentration duct (12) respectively have an increasing cross-section and a decreasing cross-section towards said grille (13), said grille having air passage channels which respectively have a conical axial shape which diverges in a diffusion portion (13a) and converges in a concentration portion (13b) of said grille.

2. An air vent according to claim 1, characterized in that the diffuser body (10), the concentration duct (12), the valve unit (17) and the actuation means (25) are made of thermoplastic material.

3. An air vent according to claim 1, characterized in that the diffusion chamber (10c) and the concentration duct (12) have any cross-section, typically a substantially quadrangular or circular one.

4. An air vent according to claim 1, characterized in that said diffuser body (10) and said concentration duct (12) are formed separately and mutually coupled in a stable manner.

5. An air vent according to claim 1, characterized in that the thickness of the grille (13) is 5-30% of the shorter side of an outlet section (12a) of the concentration duct (12).

6. An air vent according to claim 1, characterized in that the axis of the channels is orientated at different angles with respect to the direction that is normal to the plane of tangency of the grille.

7. An air vent according to claim 1, characterized in that the valve unit (17) is hinged, by means of pivots (19), to the diffuser body (10) and comprises two valve elements (17a,17b) that include respective panels (170,171) that are mutually hinged by means of a film hinge (172).

8. An air vent according to claim 8, characterized in that each one of the panels (170,171) of the valve elements (17a,17b) has respective rigid sectors (20,21) for supporting corresponding actuation pins (22,23) that cooperate with the actuation means (25).

9. An air vent according to claim 8, characterized in that the actuation means (25) comprises an oscillating panel (28) to which the actuation knob (26) is rigidly coupled at one end and a transmission head (T) is rigidly coupled at the other end, cam-shaped slots (30,31) being formed in said head, said actuation pins (22,23) engaging said slots.

10. An air vent according to claim 9, characterized in that the cam-like slots (30,31) have respective central parallel portions, that are ineffective in terms of the movement of the valve elements (17a,17b), and respective opposite end portions (30a,31a) that are shaped so as to produce, by their engagement with the respective actuation pins (22,23), the selective and respective oscillation of said valve elements.

11. An air vent according to claim 10, characterized in that the actuation knob (26) can be moved into at least three angular positions (CC,FC,FD) that are made stable by a position-setting element and correspond to the following configurations: complete closure of both the diffuser and the concentrator, opening of the concentrator alone, opening of the diffuser alone.

## Patentansprüche

1. Belüftungseinrichtung für die Klimasteuerung von Kraftfahrzeugen mit einem Diffuserkörper (10), der eine Diffusionskammer (10c) mit einem Strömungskonzentrierungskanal (12) abgrenzt, welche beide an einem Gitter münden, das in zwei Teile (13a, 13b) zur Diffusion und Konzentrierung aufgestellt ist, wobei die Einlaßteile der Diffusionskammer (10c) und des Konzentrierungskanals (13) durch entsprechende Ventilelemente (17a, 17b) einer von einem Betätigungsmittel (25) betätigen Ventileinheit (17) separat geschlossen und/oder eingeschränkt werden und das Betätigungsmittel (25) einen einzelnen Knopf (26) aufweist, der aus einer Grundfläche (27) des Gitters (13) hervorsteht, **dadurch gekennzeichnet**, daß die Diffusionskammer (10c) und der Konzentrierungskanal (12) jeweils einen zunehmenden bzw. abnehmenden Querschnitt zum Gitter (13) hin aufweisen, das mit Luftdurchtrittekanälen versehen ist, welche jeweils eine konische Axialform aufweisen, die in einem Diffusionsteil (13a) divergiert bzw. in einem Konzentrierungsteil (13b) des Gitters konvergiert.

2. Belüftungseinrichtung nach Anspruch 1, **dadurch gekennzeichnet**, daß der Diffuserkörper (10), der Konzentrierungskanal (12), die Ventileinheit (17) und das Betätigungsmittel (25) aus thermoplastischem Material hergestellt sind.

3. Belüftungseinrichtung nach Anspruch 1, **dadurch gekennzeichnet**, daß die Diffuserkammer (10c) und der Konzentrierungskanal (12) irgendeinen Querschnitt aufweisen, typischerweise einen im wesentlichen viereckigen oder runden Querschnitt.

4. Belüftungseinrichtung nach Anspruch 1, **dadurch gekennzeichnet**, daß der Diffuserkörper (10) und der Konzentrierungskanal (12) getrennt ausgebildet und miteinander in stabiler Weise gekoppelt sind.

5. Belüftungseinrichtung nach Anspruch 1, **dadurch gekennzeichnet**, daß die Dicke des Gitters (13) 5 bis 30% der kürzeren Seiten eines Auslaßteils (12a) des Konzentrierungskanals (12) beträgt.

6. Belüftungseinrichtung nach Anspruch 1, **dadurch gekennzeichnet**, daß die Achse der Kanäle in verschiedenen Winkeln zur Richtung ausgerichtet ist, die senkrecht zur Tangentialebene des Gitters steht.

7. Belüftungseinrichtung nach Anspruch 1, **dadurch gekennzeichnet**, daß die Ventileinheit (17) mittels Zapfen (19) schwenkbar zum Diffuserkörper (10) ausgerichtet ist und zwei Ventilelemente (17a, 17b) umfaßt, die jeweils Platten (170, 171) aufweisen, die miteinander über ein Filmscharnier (172) schwenkbar verbunden sind.

8. Belüftungseinrichtung nach Anspruch 7, **dadurch gekennzeichnet**, daß jede der Platten (170, 171) der Ventilelemente (17a, 17b) jeweils starre Teile (20, 21) zum Tragen entsprechender Betätigungsstifte (22, 23) aufweist, welche mit dem Betätigungsmittel (25) zusammenwirken.

9. Belüftungseinrichtung nach Anspruch 8, **dadurch gekennzeichnet**, daß das Betätigungsmittel (25) eine oszillierende Platte (28) aufweist, mit der an einem Ende der Betätigungsknopf (26) und dem anderen Ende ein Übertragungskopf (T) starr gekoppelt ist, wobei nockenförmige Schlitze (30, 31) in besagtem Kopf ausgebildet sind, und die die Betätigungsstifte (22, 23) eingreifen.

10. Belüftungseinrichtung nach Anspruch 9, **dadurch gekennzeichnet**, daß die nockenförmigen Schlitze (30, 31) jeweils zentrale parallele Teile, welche bezüglich der Bewegung der Ventilelemente (17a, 17b) unwirksam sind, sowie jeweils entgegengesetzte Endteile (30a, 31a) aufweisen, die so geformt sind, daß sie durch Zusammenwirken mit den jeweiligen Betätigungsstiften (22, 23) die selektive und gegenseitige Oszillation der besagten Ventilelemente erzeugen.

11. Belüftungseinrichtung nach Anspruch 10, **dadurch gekennzeichnet**, daß der Betätigungsknopf (26) in wenigstens drei Winkelstellungen (CC, FC, FD) bewegt werden kann, die durch ein Positionsfixierelement stabilisiert werden und den folgenden Konfigurationen entsprechen; völliges Schließen sowohl von Diffuser wie auch Konzentrierer, Öffnen nur des Konzentrierers, Öffnen nur des Diffusers.

## Revendications

1. Bouche d'aération pour l'air de commande de climatisation de véhicules à moteur, comportant un corps diffuseur (10) qui délimite une chambre de diffusion (10) contenant un conduit de concentration d'écoulement (12), qui tous deux se terminent au niveau d'une grille qui est divisée en deux parties (13a, 13b) de diffusion et de concentration respectivement, les tronçons d'entrée de la chambre de diffusion (10c) et du conduit de concentration (12) étant fermés et/ou limités de manière séparée par des éléments de clapet respectifs (17a, 17b) d'une unité de clapet (17) actionnée par des moyens d'actionnement (25) qui comportent un seul bouton (26) qui fait saillie à partir d'une base (27) de la grille (13), caractérisée en ce que ladite chambre de diffusion (10c) et ledit conduit de concentration (12) ont respectivement une section transversale croissante et une section transversale décroissante en direction de ladite grille (13), ladite grille ayant des canaux de passage d'air qui ont respectivement une forme axiale conique qui diverge dans une partie de diffusion (13a) et converge dans une partie de concentration (13b) de ladite grille.

2. Bouche d'aération selon la revendication 1, caractérisée en ce que le corps diffuseur (10), le conduit de concentration (12), l'unité de clapet (17) et les moyens d'actionnement (25) sont constitués de matière thermoplastique.

3. Bouche d'aération selon la revendication 1, caractérisée en ce que la chambre de diffusion (10a) et le conduit de concentration (12) ont une section transversale quelconque, de manière typique une section transversale sensiblement quadrangulaire ou circulaire.

4. Bouche d'aération selon la revendication 1, caractérisée en ce que ledit corps diffuseur (10) et ledit conduit de concentration (12) sont formés séparément et mutuellement reliés d'une manière stable.

5. Bouche d'aération selon la revendication 1, caractérisée en ce que l'épaisseur de la grille (13) est de 5 à 30 % du côté le plus court d'un tronçon de sortie (12a) du conduit de concentration (12).

6. Bouche d'aération selon la revendication 1, caractérisée en ce que l'axe des canaux est orienté selon des angles différents par rapport à la direction qui est perpendiculaire au plan de tangence de la grille.

7. Bouche d'aération selon la revendication 1, caractérisée en ce que l'unité de clapet (17) est articulée, par l'intermédiaire de pivots (19), sur ledit corps diffuseur (10) et comporte deux éléments de clapet (17a, 17b) qui comportent des panneaux respectifs (170, 171) qui sont mutuellement articulés par l'intermédiaire d'une charnière-film (172).

8. Bouche d'aération selon la revendication 7, caractérisée en ce que chacun des panneaux (170, 171) des éléments de clapet (17a, 17b) a des secteurs rigides respectifs (20, 21) destinés à supporter des axes d'actionnement correspondants (22, 23) qui coopèrent avec les moyens d'actionnement (25).

9. Bouche d'aération selon la revendication 8, caractérisée en ce que les moyens d'actionnement (25) comportent un panneau oscillant (28) auquel le bouton d'actionnement (26) est relié de manière rigide à une première extrémité et une tête de transmission (T) est reliée de manière rigide à l'autre extrémité, des fentes en forme de came (30, 31) étant formées dans ladite tête, lesdits axes d'actionnement (22, 23) venant en prise dans lesdites fentes.

10. Bouche d'aération selon la revendication 9, caractérisée en ce que les fentes en forme de came (30, 31) ont des parties centrales parallèles respectives, qui sont inefficaces en termes de déplacement des éléments de clapet (17a, 17b) et des parties d'extrémité opposées respectives (30a, 31a) qui sont formées de manière à produire, par leur mise en prise avec les axes d'actionnement respectifs (22, 23), l'oscillation sélective et respective desdits éléments de clapet.

11. Bouche d'aération selon la revendication 10, caractérisée en ce que le bouton d'actionnement (26) peut être déplacé dans au moins trois positions angulaires (CC, FC, FD) qui sont rendues stables par un élément de fixation de position et qui correspondent aux configurations suivantes : fermeture complète du diffuseur et du dispositif de concentration, ouverture du dispositif de concentration seul, ouverture du diffuseur seul.
